# EUROPÄISCHE PATENTSCHRIFT

(11) **EP 1 336 926 B1**
(45) Veröffentlichungstag und Bekanntmachung des Hinweises auf die Patenterteilung: **30.08.2006**
(21) Anmeldenummer: 02003670.3
(22) Anmeldetag: 18.02.2002
(51) Int. Cl.: H04M 15/28

(54) **Vergebührungsvorrichtung für Telekommunikations-Endgeräte und zugehörige vermittlungsseitige Vergebührungsplattform**
Accounting apparatus for telecommunication terminals and related accounting platform at exchange side
Dispositif de taxation pour terminaux de communication et plate-forme de taxation correspondante au niveau du central

(43) Veröffentlichungstag der Anmeldung: 20.08.2003
(73) Patentinhaber: SIEMENS AKTIENGESELLSCHAFT, 80333 München (DE)
(72) Erfinder: Bauche, Volker, 81739 Muenchen (DE); Bitterlich, Jean-Yves, 81667 Muenchen (DE); Dinkheller, Domenica, 80636 Muenchen (DE); Galligo, Michel, 75003 Paris (FR); Pasteanu, Calinel, 82269 Walleshausen (DE); Reich, Henning, 86391 Stadtbergen (DE)

(56) Entgegenhaltungen:
- EP-A- 0 556 840
- EP-A- 1 130 495
- WO-A-01/13298
- WO-A-01/86598
- US-A1- 2001 037 467

## Beschreibung

Telekommunikations-Endgerät und zugehörige vermittlungsseitige Vergebührungsplattform

Die vorliegende Erfindung bezieht sich auf ein Telekommunikations-Endgerät mit Vergebührungsvorrichtung und eine zugehörige vermittlungsseitige Vergebührungsplattform und insbesondere auf mobile Telekommunikations-Endgeräte.

Telekommunikations-Endgeräte wie z.B. schnurgebundene oder schnurlose Telefone, PC's, PDA's, Palmgeräte, Handys usw. haben in der Berufs- und Freizeitwelt eine starke Verbreitung gefunden, wobei insbesondere auch die Verbreitung von Anwendungsprogrammen zur Verwendung in diesen Endgeräten stark zunimmt. Üblicherweise wurden derartige Anwendungsprogramme über ein herkömmliches Vertriebssystem verkauft, wobei in der Regel eine einmalige Zahlung für das gesamte Anwendungsprogramm stattfindet. Mit der Verbreitung des Internets wurde ein derartiger Vertrieb zunehmend auch direkt über die (Telekommunikations-)Netzwerke durch Herunterladen der jeweiligen Anwendungsprogramme durchgeführt, wobei eine Zahlung bzw. Vergebührung in der Regel über Kreditkartensysteme, Rechnung oder Bankeinzug erfolgt.

Insbesondere kreditkartenbasierte Zahlungssysteme stoßen jedoch beim Benutzer oftmals auf Skepsis, da die bei der Übertragung sicherheitsrelevanter Daten (z.B. Kreditkartennummer) durchgeführten Sicherheitsvorkehrungen oft nicht nachvollzogen oder als nicht ausreichend empfunden werden. Darüber hinaus fallen für die Übertragung der Daten auch Kosten beim Netzbetreiber in dessen Netz (Internet, WAP usw.) an, so dass neben der eigentlichen Vergebührung auch noch die Nutzungskosten für das Netz anfallen.

Aus der Druckschrift R. Schmidt "Zahlungssysteme für M-Commerce", Funkschau 17/2001, Seiten 20 bis 23 sind eine Vielzahl von unterschiedlichen elektronischen Zahlungs- bzw. Vergebührungssysteme insbesondere für den Handel mit mobilen Endgeräten bekannt, wobei auch sogenannte Prepaid-Systeme beschrieben werden, bei denen eine Registrierung des Benutzers entfällt. Alternativ werden auch Zahlungssysteme beschrieben, bei denen eine Registrierung des Benutzers bzw. Endkunden notwendig ist, sowie Mischformen hiervon, wie z.B. Paybox. Nachteilig ist jedoch hierbei entweder die notwendige Übertragung von sicherheitsrelevanten Daten (wie z.B. PIN usw.), eine unerwünschte Benutzerregistrierung und/oder eine begrenzte Guthabensumme (z.B. Prepaid-Systeme).

Aus der Druckschrift WO-A-0113298 ist ein Verfahren und System zum Vereinfachen eines Erwerbs von Waren oder Dienstleistungen bekannt, wobei an unterschiedlichen Orten innerhalb des Systems eine Anwendungs-Verarbeitungseinheit zum Verarbeiten eines Anwendungsprogramms, eine Kommunikations-Schnittstelle zum Übertragen von speziellen Abrechnungseinheiten, z.B. SMS, eine Vergebührungs-Speichereinheit und eine Endgeräte-Vergebührungseinheit verwendet werden.

Ferner ist aus der Druckschrift EP-A-0 556 840 ein kommerzielles Spielgerät bekannt, auf das Computerspiele heruntergelagen werden können. Der Spieler wählt hierbei ein gewünschtes Spiel aus und wirft eine entsprechende Summe von Münzen in einen hierzu vorgesehenen Münzeinwurf. Daraufhin wird das Spiel in den Arbeitsspeicher des Spielgeräts geladen.

Demgegenüber liegt der Erfindung die Aufgabe zu Grunde ein Telekommunikations-Endgerät mit alternativer Vergebührungsvorrichtung und eine zugehörige vermittlungsseitige Vergebührungsplattform zu schaffen, wobei eine zusätzliche Registrierung vermieden und trotzdem unbegrenzte Zahlungsmöglichkeiten ohne Preisgabe von sicherheitsrelevanten Daten ermöglicht werden.

Erfindungsgemäß wird diese Aufgabe hinsichtlich des Telekommunikations-Endgeräts durch die Merkmale des Patentanspruchs 1 und hinsichtlich der vermittlungsseitigen Vergebührungsplattform durch die Merkmale des Patentanspruchs 10 gelöst.

Insbesondere durch die Verwendung einer Vergebührungs-Speichereinheit zum Speichern von Datensätzen von zumindest einem Freigabe-Merkmal eines in einer Anwendungs-Verarbeitungseinheit zu verarbeitenden Anwendungsprogramms und einem zugehörigen Abfragewert, sowie einer Endgeräte-Vergebührungseinheit zur Ansteuerung der Anwendungs-Verarbeitungseinheit, einer Kommunikations-Schnittstelle und einer Vergebührungs-Speichereinheit derart, dass bei einer Freigabeanforderung des Anwendungsprogramms eine spezielle Abrechnungseinheit an eine vermittlungsseitige Vergebührungsplattform gesendet wird, sowie der dem Freigabemerkmal des Anwendungsprogramms zugehörige Abfragewert gesetzt und eine Freigabe des Anwendungsprogramss nur bei gesetztem Abfragewert erfolgt und dieser hierbei rückgesetzt wird, können von einem Dienstanbieter angebotene Dienste bzw. Freigabe-Merkmale beliebig und ohne zusätzliche Registrierung durch üblicherweise ohnehin vorhandene spezielle Abrechnungseinheiten einer Kommunikations-Schnittstelle vergebührt werden. Der Abfragewert kann beispielsweise durch Senden oder Senden und Empfangen von speziellen Abrechnungseinheiten der Kommunikations-Schnittstelle erhöht und bei Freigabe eines zugehörigen Freigabe-Merkmals für die Anwendung verringert werden.

Vorzugsweise weisen die speziellen Abrechnungseinheiten eine Identifikationsnummer des Telekommunikations-Endgeräts und einen digitalen Referenzcode zur Festlegung einer eindeutigen Zuordnung zwischen einem Dienstanbieter und einem Anwendungsprogramm auf, wodurch für eine Vielzahl von Dienstanbietern ein jeweiliges (Teil-)Anwendungsprogramm freigeschaltet und gleichzeitig vergebührt werden kann.

Vorzugsweise weist die Vergebührungs-Speichereinheit eine Preis-Speichereinheit zum Speichern von zumindest einer Preisgruppe für zumindest eine Servicenummer eines Betreibers in Abhängigkeit von verwendeten Abrechnungseinheiten und eine Merkmals-Speichereinheit zum Speichern des zumindest einen Freigabe-Merkmals, der zugehörigen Preisgruppe sowie einem zugehörigem digitalen Referenzcode auf, wodurch darüber hinaus eine hochflexible Preisgestaltung für jeweilige Merkmale des Anwendungsprogramms unabhängig von einem jeweiligen Betreiber und unabhängig von einer jeweiligen Währung realisiert werden kann.

Vorzugsweise kann ferner ein Anwendungs-Manager zur Realisierung eines Herunterladens des Anwendungsprogramms über die Kommunikations-Schnittstelle von einem Anwendungs-Server vorgesehen sein, wodurch ein vollständiges unabhängiges System entsteht. Selbstverständlich kann das Anwendungsprogramm auch auf herkömmliche Weise lokal vom Benutzer in das Telekommunikations-Endgerät geladen werden, wobei dieser Anwendungs-Manager überflüssig wird.

Die speziellen Abrechnungseinheiten der Kommunikations-Schnittstellen können beispielsweise Kurznachrichten, wie z.B. SMS, oder sogenannte Sprachsteuerungscomputersignale (IVR, interactive voice response) beinhalten, die in der Regel von einer Vielzahl von Netzbetreibern ohnehin zur Verfügung gestellt werden.

Der Abfragewert kann beispielsweise eine Guthaben-Anzahl und/oder eine Guthaben-Zeitdauer für ein zugehöriges Freigabe-Merkmal aufweisen, wodurch sich ein Vorratskauf für sowohl eine mehrfache Nutzung eines Anwendungsprogramms bzw. Anwendungsprogrammteils als auch eine zeitgesteuerte Nutzung realisieren lässt.

Vorzugsweise ist das Telekommunikations-Endgerät ein mobiles Endgerät wie beispielsweise ein Handy oder ein PDA mit Kommunikations-Schnittstelle, wodurch das mobile Endgerät problemlos zum Zahlungs- bzw. Vergebührungsgerät erweitert wird.

Vermittlungsseitig wird insbesondere durch eine Dienstanbieter-Speichereinheit zum Speichern von zumindest einem Dienstanbieter und eines zugehörigen Anwendungsprogramms und einer Server-Vergebührungseinheit, die in Abhängigkeit von einer über die Kommunikations-Schnittstelle eines Netzbetreibers eingehende spezielle Abrechnungseinheit eine Zuordnung eines beim Betreiber entstandenen Vergebührungswertes zum Dienstanbieter durchgeführt, wodurch im Wesentlichen die Zahlung erfolgt. Da diese Zahlung unmittelbar über den Netzbetreiber abgewickwelt wird, ist keine zusätzliche Registrierung des Benutzers bzw. Endkunden notwendig. Vielmehr genügt es demzufolge, wenn der Dienstanbieter über die Dienstanbieter-Speichereinheit der Vergebührungsplattform registriert ist und das zu vergebührende Anwendungsprogramm Merkmale nur in Abhängigkeit von einem korrespondierenden Abfragewert (Check consistency) freigibt.

Die Dienstanbieter-Speichereinheit kann darüber hinaus einen Datensatz für eine Servicenummer, einen Anwendungsprogrammcode und/oder einen Aktionswert zum zugehörigen digitalen Referenzcode speichern, wobei die Servicenummer die Nummer eines jeweiligen Betreibers, der Anwendungsprogrammcode ein jeweils genutztes Freigabe-Merkmal und der Aktionswert eine jeweils durchzuführende Aktion der Vergebührungsplattform bei Empfang einer speziellen Abrechnungseinheit darstellt. Auf diese Weise kann eine hochflexible und feingranulare Vergebührung von Diensten bzw. Dienstmerkmalen durchgeführt werden.

Vorzugsweise ist die durchzuführende Aktion das Absenden einer SMS-Nachricht an ein die Abrechnungseinheit absetzendes Telekommunikations-Endgerät und/oder eine HTTP-Nachricht an einen Anwendungs-Server des Dienstanbieters, wodurch auch weitergehende Vergebührungsmodelle realisiert werden können und insbesondere ein Dienstanbieter über die Nutzung seines Dienstes bzw. des Anwendungsprogramms informiert wird.

Es zeigen:
- Figur 1: eine vereinfachte Blockdarstellung eines Vergebührungssystems mit einer erfindungsgemäßen Vergebührungsvorrichtung für Telekommunikations-Endgeräte und einer zugehörigen vermittlungsseitigen Vergebührungsplattform;
- Figur 2: eine vereinfachte Darstellung eines möglichen Inhalts einer Preis-Speichereinheit;
- Figur 3: eine vereinfachte Darstellung eines möglichen Inhalts einer Merkmals-Speichereinheit;
- Figur 4: eine vereinfachte Darstellung möglicher Inhalte einer Dienstanbieter-Speichereinheit; und
- Figuren 5 bis 8: eine vereinfachte Darstellung eines Funktionsbeispiels der Vergebührungsvorrichtung und Vergebührungsplattform im Vergebührungssystem gemäß Figur 1.

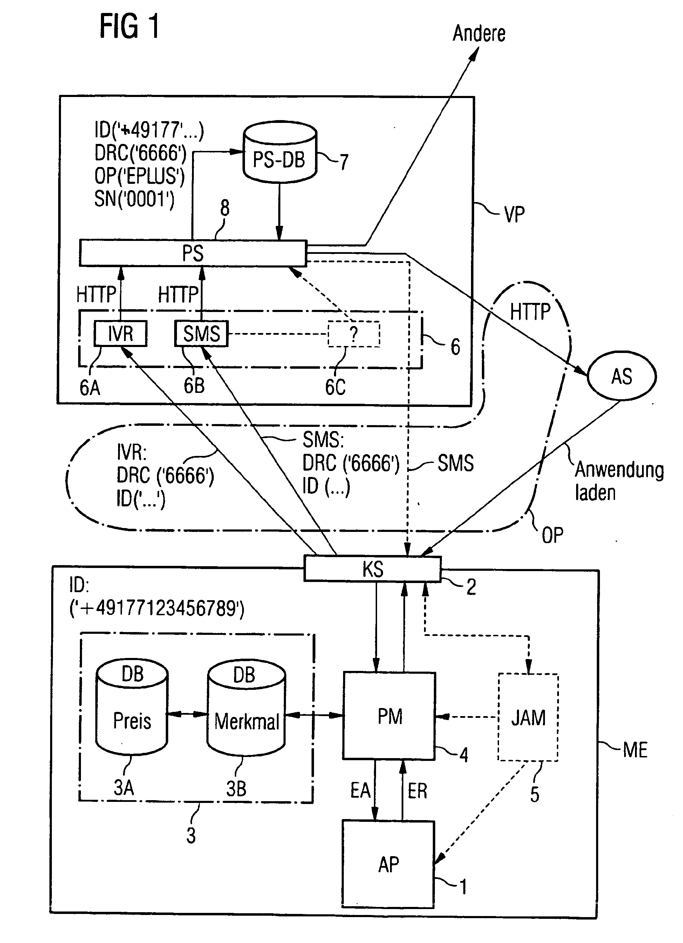

Figur 1 zeigt eine vereinfachte Blockdarstellung eines Vergebührungssystems mit einer Vergebührungsvorrichtung für ein Telekommunikations-Endgerät ME und eine zugehörige vermittlungsseitige Vergebührungsplattform VP.

Das Telekommunikations-Endgerät ME, welches vorzugsweise aus einem mobilen Telekommunikations-Endgerät wie beispielsweise einem Handy besteht, ist über ein Netzwerk eines Netzbetreibers OP mit der vermittlungsseitigen Vergebührungsplattform VP verbunden, wobei darüber hinaus eine zusätzliche Verbindung zu einem Anwendungs-Server AS eines Dienstanbieters bestehen kann.

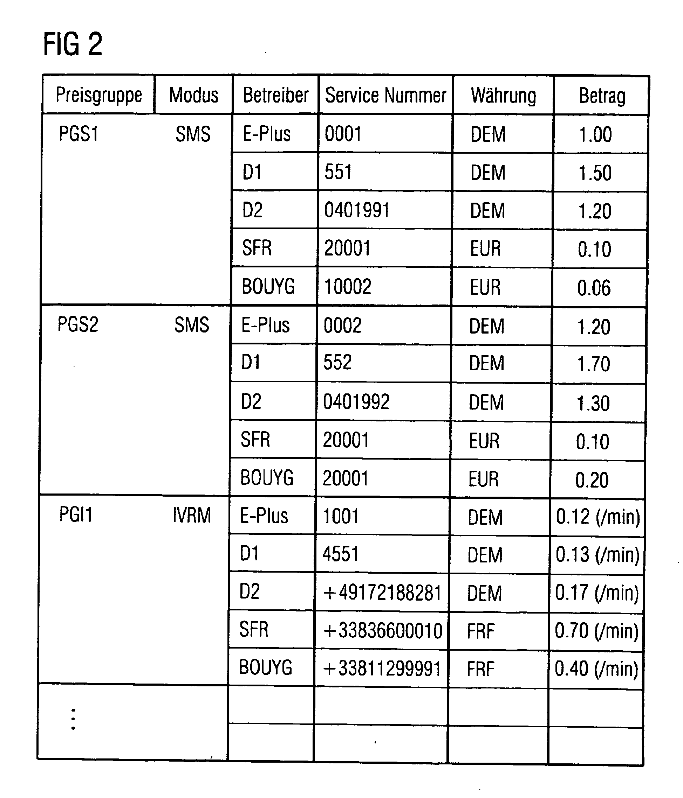

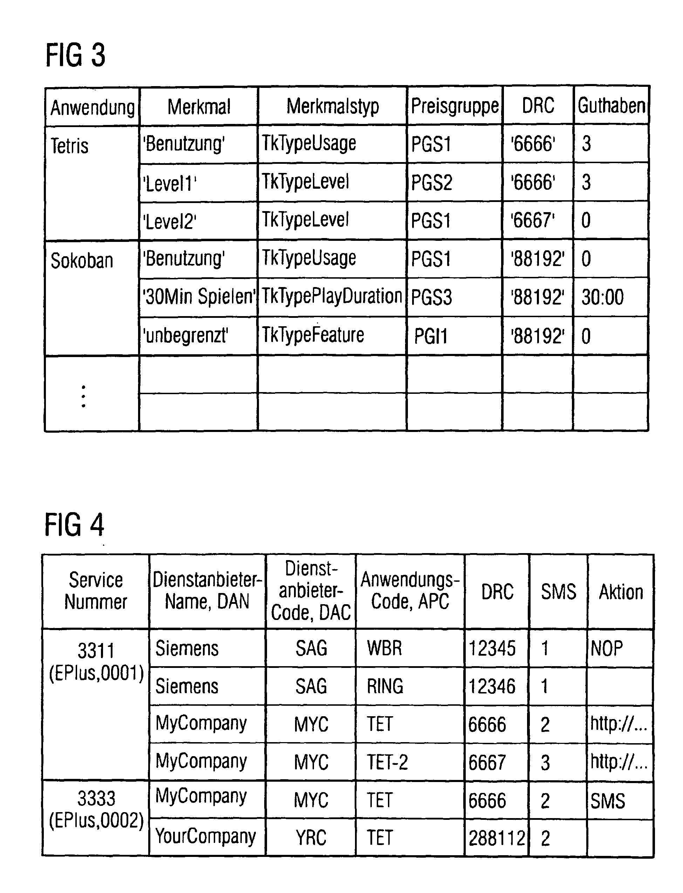

Die Vergebührungsvorrichtung des Telekömmunikations-Endgerätes ME besteht im Wesentliche aus einer Anwendungs-Verarbeitungseinheit 1 zum Verarbeiten eines Anwendungsprogramms AP (application), einer Kommunikations-Schnittstelle 2 zu dem Netzbetreiber OP, die eine zusätzliche Abrechnungs-Schnittstelle zum Übertragen von speziellen Abrechnungseinheiten SMS, IVR unterstützt, einer Vergebührungs-Speichereinheit 3 zum Speichern von Datensätzen von zumindest einem Freigabe-Merkmal des Anwendungsprogramms AP und einem zugehörigen Abfragewert und einer Endgeräte-Vergebührungseinheit 4 zur Ansteuerung der Anwendungs-Verarbeitungseinheit 1, der Kommunikations-Schnittstelle 2 und der Vergebührungs-Speichereinheit 3 derart, dass der Abfragewert durch Senden oder Senden und Empfangen der speziellen Abrechnungseinheiten SMS oder IVR erhöht und bei Freigabe des zugehörigen Freigabe-Merkmals für das Anwendungsprogramms AP in der Vergebührungs-Speichereinheit 3 verringert wird. Die genaue Funktionsweise wird später unter Bezugnahme auf die Figuren 2 und 3 beschrieben.

Gemäß Figur 1 kann die Vergebührungsvorrichtung für das Telekommunikations-Endgerät ME optional auch einen sogenannten Anwendungs-Manager 5 (Java Application Manager, JAM) zur Realisierung eines Herunterladens des Anwendungsprogramms AP über die Kommunikations-Schnittstelle 2 von dem Anwendungs-Server AS aufweisen, wodurch sich eine "Stand-alone" Lösung ergibt. Grund-sätzlich ist es jedoch auch möglich das Anwendungsprogramm AP bzw. Anwendungsdaten direkt vom Benutzer in die Anwendungs-Verarbeitungseinheit 1 zu laden.

Vermittlungsseitig besitzt die Vergebührungsplattform VP wiederum eine Kommunikations-Schnittstelle 6 zu dem Netzbetreiber OP, die wiederum eine zusätzliche Abrechnungs-Schnittstelle 6A bis 6C zum Übertragen von speziellen Abrechnungseinheiten unterstützt. Diese speziellen Abrechnungseinheiten sind beispielsweise sogenannte Kurznachrichten bzw. Short Messages SMS oder Sprachssteuerungscomputersignale bzw. IVR-Signale (IVR, interactive voice response). Derartige Abrechnungseinheiten werden üblicherweise ohnehin von einem Netzbetreiber OP unterstützt und stellen neben der normalen Vergebührung des Netzbetreibers eine zusätzliche Vergebührungsmöglichkeit dar, welche die vorliegende Erfindung nutzt.

Gemäß Figur 1 wird in einer Dienstanbieter-Speichereinheit 7 ein Datensatz von zumindest einem Dienstanbieter und einem zugehörigen Anwendungsprogramm gespeichert und genauer gesagt ein jeweiliger Dienstanbieter exakt dem in der Anwendungs-Verarbeitungseinheit 1 verarbeiteten Anwendungsprogramm AP zugeordnet. Eine Server-Vergebührungseinheit 8 führt nunmehr in Abhängigkeit von einer eingehenden speziellen Abrechnungseinheit, die vom Telekommunikations-Endgerät ME abgesetzt wurde, eine Zuordnung eines beim Betreiber OP entstandenen Vergebührungswertes zum Dienstanbieter durch, wodurch im Wesentlichen eine Vergebührung bzw. Zahlung für die im Endgerät ME verwendete Dienstleistung bzw. das abgearbeitete Anwendungsprogramm AP vergebührt bzw. bezahlt wird.

Demzufolge kann beispielsweise gemäß Figur 1 ein Benutzer des mobilen Endgerätes ME eine Anwendung vom Anwendungs-Server AS kostenlos herunterladen, wobei das Anwendungsprogramm gemeinsam mit einer Beschreibungsdatei (description file) geladen wird, die eine Liste von Freigabe-Merkmalen aufweist, die von der Anwendung bzw. dem Anwendungsprogramm AP benutzt werden. Diese Liste wird in der Vergebührungs-Speichereinheit 3 bzw. einer Merkmals-Speichereinheit 3B abgelegt und passt zu einer weiteren Liste von Vergebührungsmöglichkeiten, die in einer Preis-Speichereinheit 3A abgelegt sind und beispielsweise die unterschiedlichen Vergebührungsmodelle der jeweiligen Kommunikations-Schnittstelle 2 und eines jeweiligen Netzbetreibers OP beschreibt. Beim Abarbeiten des Anwendungsprogramms AP werden bei-spielsweise zur Fortsetzung des Anwendungsprogramms Freigabeanforderungen ER (Enable Request) an die Endgeräte-Vergebührungseinheit 4 in Zusammenhang mit einem vorbestimmten Freigabe-Merkmal abgegeben, wobei beispielsweise durch Absenden einer Abrechnungseinheit (SMS) vom Endgerät ME die (Teil-)Anwendung eine Freigabe EA (Enable Acknowledge) erhält. Unter Verwendung der ohnehin auf der Abrechnungs-Schnittstelle vorhandenen zusätzlichen Abrechnungseinheiten wie z.B. SMS und IVR wird somit eine Bezahlung bzw. Vergebührung des Anwendungsprogramms bzw. von speziellen Teilmerkmalen dieser Anwendung unmittelbar vom Netzbetreiber OP ermöglicht.

Genauer gesagt wird bei einer Freigabeanforderung EA von der Vergebührungseinheit 4 über die Kommunikations-Schnittstelle 2 eine Abrechnungseinheit abgesetzt und bei erfolgreichem Senden ein zugehöriger Abfragewert, der beispielsweise in der Vergebührungs-Speichereinheit 3 abgelegt ist, gesetzt (z.B. inkrementiert bzw. erhöht). Anschließend überprüft die Vergebührungseinheit 4 diesen gesetzten Abfragewert, wobei sie bei positiver Abfrage, z.B. Abfragewert > 0, eine jeweilige Frei-gabe EA an die Anwendungs-Verarbeitungseinheit 1 bzw. das Anwendungsprogramm AP erteilt und gleichzeitig den Abfragewert zurücksetzt bzw. verringert.

In gleicher Weise kann auch ein mehrmaliges Absenden von Abrechnungseinheiten durchgeführt werden, wodurch sich für den Abfragewert Guthabenwerte wie z.B. eine Guthaben-Anzahl oder -Zeitdauer für jeweilige Anwendungsmerkmale ergeben, die auch eine Vorauszahlung beispielsweise für einen off-line Betrieb ermöglichen.

Abhängig von einem jeweiligen Netzbetreiber OP kann eine derartige Vergebührung bzw. Erhöhung des Abfragewerts in der Vergebührungs-Speichereinheit 3 z.B. durch Senden einer speziellen Abrechnungseinheit SMS oder IVR durchgeführt werden oder aber, wenn ein derartiger Vorgang keine Vergebührung beim Betreiber auslöst, so kann von der Vergebührungsplattform VP bei einer eingehenden Abrechnungseinheit eine oder mehrere Abrechnungseinheiten beispielsweise zum mobilen Endgerät ME abgesetzt werden, wodurch wiederum eine eigentliche Vergebührung für den Nutzer des mobilen Endgeräts ME entsteht. Auf Grund der eindeutigen Zuordnung einer jeweiligen Anwendung bzw. eines jeweiligen Anwendungsprogramms zu einem jeweiligen Dienstanbieter über die Dienstanbieter-Speichereinheit 7 kann vermittlungsseitig die Server-Vergebührungseinheit 8 eine Zuordnung der durch die Abrechnungseinheiten entstandenen Abfrage zum Dienstanbieter durchführen. Im vorliegenden Beispiel erfolgt die Vergebührung tatsächlich über die Infrastruktur des Netzbetreibers OP und über das sogenannte "revenue sharing model" des Betreibers. Nach Abschluss des Vergebührungsvorgangs kann optional eine anwendungsdefinierte Aktion angestoßen werden, wobei beispielsweise die Server-Vergebührungseinheit 8 eine HTTP-Verbindung zum Dienstanbieter aufbaut und beispielsweise eine Nutzungsbestätigung für das jeweilige Anwendungsprogramm des Dienstanbieters übermittelt. In gleicher Weise können jedoch auch SMS-Nachrichten oder andere Aktionen in Abhängigkeit von der Infrastruktur des Netzbetreibers OP eingeleitet werden.

Aus der Sicht des Benutzers beginnt das Anwendungsprogpramm AP erneut, bzw. führt das Anwendungsprogramm nach der Unterbrechung fort, sobald die Abfragewerte zu den zugehörigen Freigabe-Merkmalen modifiziert wurden und die Freigabe EA der Anwendung AP erfolgt.

Die Erfindung wird nachstehend anhand eines konkreten JAVA-Anwendungsprogramms wie z.B. dem Spiel "Tetris" näher beschrieben.

Das Anwendungsprogramm AP ist hierbei ein JAVA-Anwendungsprogramm, das beispielweise über das Internet direkt auf das mobile Endgerät ME geladen werden kann. In gleicher Weise kann es auch über ein Datenkabel geladen werden und kostenlos oder vom Benutzer bezahlt worden sein.

Der Anwendungs-Server AS (stellt hierbei das zu ladende Spiel bzw. das Anwendungsprogramm zur Verfügung, wobei beispielsweise in einem netzwerkbasierenden Spiel hiervon ebenfalls die Informationen für das Spiel verwaltet werden können. Für die vermittlungsseitige Vergebührungsplattform können beispielsweise bestehende Vergebührungs-Server verwendet werden, wie z.B. sogenannte MobileWay-Server. Derartige Vergebührungs-Server besitzen IVR- und/oder SMS-Abbuchungsschnittstellen zur Verwaltung von eingehenden IVR-Rufen und/oder SMS-Nachrichten, die als spezielle Abrechnungseinheiten vom mobilen Endgerät ME abgesetzt werden.

Mit einem derartigen Vergebührungssystem sind demzufolge folgende Vergebührungsmodelle für ein Anwendungsprogramm wie beispielsweise ein Spiel möglich:
1. kostenlose Benutzung
2. einmalige Bezahlung = Aktivierung des Anwendungsprogramms
3. Bezahlung pro Nutzung (möglich auch erste n-mal sind frei)
4. Vergebührung pro Spieldauer (möglich erste t-Minuten sind frei)
5. Vergebührung pro Zeitdauer (z.B. Flatrate = monatlich feste Gebühr)
6. Vergebührung pro Spielmerkmal/Teilmerkmal
7. Vergebührung pro Spiellevel
8. Unterstützung von Bonus-Vergebührungen (pro Nutzung, pro Zeitdauer usw.)
9. Vergebührung für vollständige Nutzung
10. Übertragung von Guthaben auf andere Konten (desselben oder eines anderen Benutzers)
11. Weitergabe (von Merkmalen, Leveln usw.) zur Erhöhung des Guthabens.

Figur 2 zeigt eine vereinfachte Darstellung möglicher Inhalte der Preis-Speichereinheit 3A gemäß Figur 1, wobei eine kategorisierte Beschreibung von jeweiligen Preisbedingungen für einen jeweiligen Netzbetreiber und für jeweilige Abrechnungseinheiten SMS oder IVR enthalten sind. Demzufolge besitzt jeder Netzbetreiber z.B. E-Plus eine Vielzahl von Preisgruppen PGS1, PGS2, PGI1 mit unterschiedlichen Beträgen und/oder Währungen. Neben den Vergebührungsbeträgen pro Abrechnungseinheit sind auch zeitdauerabhängige Beträge möglich wie beispielsweise über IVRM-Signale (interactive voice response per minute). Alternativ können hierfür auch sogenannte IVRC-Signale (interactive voice response per call) verwendet werden. Jeder Preisgruppe und jedem Modus bzw. jeder verwendeten Abrechnungseinheit ist in der Tabelle gemäß Figur 2 auch eine jeweilige Servicenummer zugeordnet, über die dieser Betrag beim Senden und/oder Empfangen einer jeweiligen Abrechnungseinheit beim Netzbetreiber OP gebucht werden kann.

Die Tabelle gemäß Figur 2 wird üblicherweise von der vermittlungsseitigen Vergebührungsplattform VP zur Verfügung gestellt und im mobilen Endgerät ME abgelegt. Sofern eine derartige Tabelle nicht im mobilen Endgerät ME vorhanden sein sollte, kann diese beispielsweise über eine nicht dargestellte HTTP-Verbindung von der vermittlungsseitigen Vergebührungsplattform heruntergeladen werden. Üblicherweise ist diese Tabelle über einen großen Zeitraum unveränderlich und sollte nicht oft geändert werden.

Figur 3 zeigt eine vereinfachte Darstellung möglicher Inhalte der Merkmals-Speichereinheit 3B, wobei die Merkmals-Speichereinheit im Wesentlichen die Beschreibungs-Datei einer jeweiligen Anwendung bzw. eines jeweiligen Anwendungsprogramms beinhaltet und beispielsweise während eines Herunterladens vom Anwendungs-Server AS abgelegt bzw. aktualisiert wird. Diese Tabelle wird direkt von der Endgeräte-Vergebührungseinheit 4 gehandhabt und weist neben den Abfrage- bzw. Guthabenwerten und zugehörigen Freigabe-Merkmalen beispielsweise ein jeweiliges Anwendungsprogramm, wie z.B. das Spiel "TETRIS", zu den Freigabe-Merkmalen zugehörige Merkmalstypen, zugehörige Preisgruppen, die mit der Preis-Tabelle gemäß Figur 2 korrespondieren, und einen zugehörigen digitalen Referenzcode DRC zur Festlegung einer eindeutigen Zuordnung zwischen einem Dienstanbieter und eines von diesem vertriebenen Anwendungsprogramms auf, wie es von der Vergebührungsplattform ebenfalls verwendet wird.

Gemäß Figur 1 wird in einer jeweiligen speziellen Abrechnungseinheit SMS oder IVR eine das Telekommunikations-Endgerät ME eindeutig bestimmende Identifikationsnummer ID und der in Figur 3 dargestellte digitale Referenzcode DRC an die Vergebührungsplattform VP gesendet, wodurch sich eine eindeutige Zuordnung zwischen einem jeweiligen Merkmal des Spiels bzw. des Anwendungsprogramms AP eines vorbestimmten Dienstanbieters ergibt. Über die zusätzlichen Preisgruppen können insbesondere in Verbindung mit der in der Preis-Speichereinheit 3A abgelegten Inhalte flexible und fein abgestimmte Vergebührungsmodelle realisiert werden. In der Spalte Guthaben der Figur 3 ist hierbei ein jeweiliger Abfrage- bzw. Guthabenwert eines vorbestimmten Merkmals bzw. Freigabe-Merkmals eines Anwendungsprogramms bzw. eines Spiels dargestellt, der in Abhängigkeit von dem Anwendungsprogramm durch die Endgeräte-Vergebührungseinheit 4 zur jeweiligen Freigabe des Merkmals verringert wird und bei Absetzung und/oder Empfang einer Abrechnungseinheit erhöht wird.

Figur 4 zeigt eine vereinfachte Darstellung möglicher Inhalte in der Dienstanbieter-Speichereinheit 7 der Vergebührungsplattform VP, wobei hier alle Informationen in Bezug zu allen Anwendungsprogrammen oder Spielen, die mit einer Servicenummer über einen Netzbetreiber verrechenbar sind, abgelegt werden. Gemäß Figur 4 sind beispielsweise einer Servicenummer 331 bzw. der speziellen Servicenummer 0001 des Netzbetreibers E-Plus mehrere Dienstanbieternamen DAN und Dienstanbietercodes DAC mit zugehörigen Anwendungsprogramm codes APC, digitalen Referenzcodes DRC und Aktionswerten zugeordnet, wobei beispielsweise der Empfang des digitalen Referenzcodes DRC = "6666" eine Benutzung des Spiels "TETRIS" für den Level 1 an den Dienstanbieter MYC anzeigt und das Absenden von SMS-Nachrichten an das mobile Endgerät ME und/oder eine HTTP-Verbindung beispielsweise zum Dienstanbieter MYC verursacht. Auf diese Weise wird über die Servicenummer eine Guthabenbuchung für den Dienstanbieter durchgeführt und zusätzlich eine eventuelle Freischaltung an das mobile Endgerät ME ermöglicht, sofern ein Netzbetreiber OP die Freischaltung durch abgehende Abrechnungseinheiten nicht erlaubt.

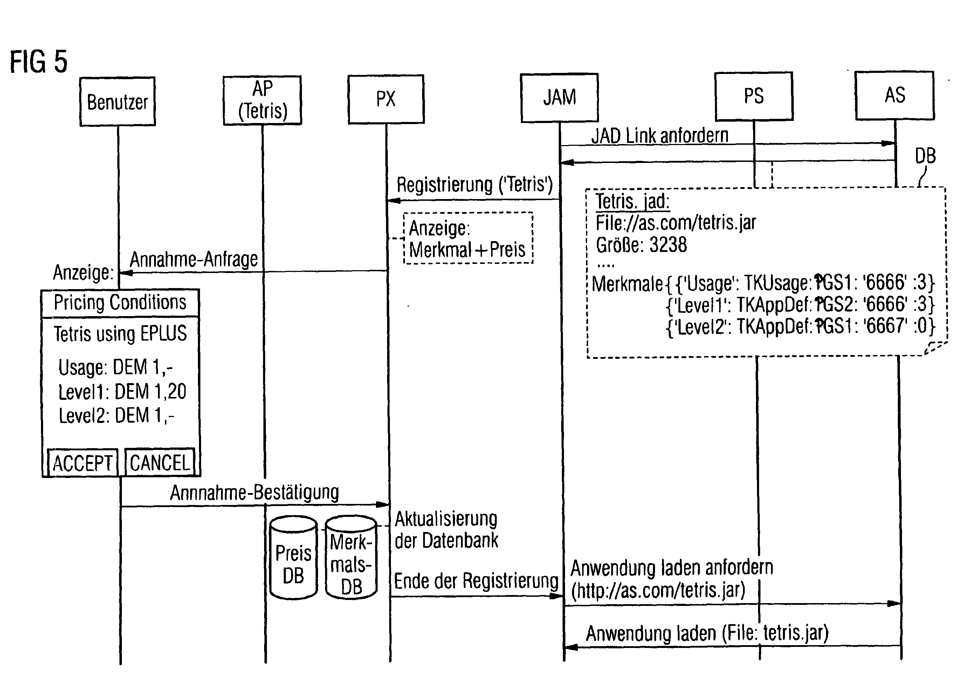

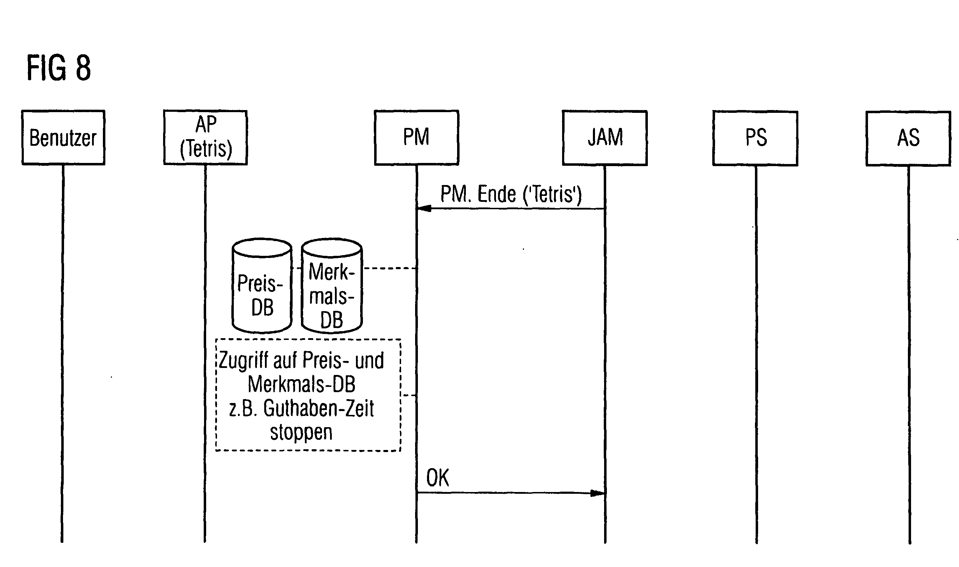

Die Figuren 5 bis 8 zeigen vereinfachte Funktionsabläufe, wie sie in dem Ausführungsbeispiel gemäß Figur 1 durchgeführt werden.

Während einer nicht dargestellten Registrierungsphase eröffnet zunächst ein Dienstanbieter bzw. Anwendungs-Entwickler ein Konto bei der vermittlungsseitigen Vergebührungsplattform. Hierbei legt der Dienstanbieter für jeden Netzbetreiber einen Endkundenpreis für seine Dienstleistung bzw. seine freizugebenden Merkmale des Anwendungsprogramms fest. Für jeden ausgewählten Netzbetreiber gibt hierbei die Vergebührungsplattform dem Dienstanbieter einen eindeutigen Datensatz bestehend aus einer Preisgruppe und einem zugehörigen digitalen Referenzcode, wobei der Dienstanbieter darüber hinaus festlegen kann, welche vorbestimmten Aktionen die vermittlungsseitige Vergebührungsplattform durchführen soll, sobald eine entsprechende Abrechnungseinheit empfangen wird. Hierbei können zwei Standardaktionen ausgewählt werden wie z.B. das Senden einer SMS-Nachricht an den Benutzer bzw. das mobile Endgerät ME und/oder das Senden eines vorbestimmten HTTP-Befehls an eine vorbestimmte Adresse. Weitere Aktionen können von Fall zu Fall verschieden sein. Diese Informationen werden vom Anwendungs-Entwickler bzw. Dienstanbieter gesammelt und in einer Beschreibungs-Datei auf den Anwendungs-Server AS gelegt.

Gemäß Figur 5 erfolgt ausgehend vom Anwendungs-Manager 5, der beispielsweise einen JAVA-Application-Manager (JAM) darstellt eine Anforderung der Beschreibungsdatei BD, die beispielsweise eine JAVA-Anwendungsbeschreibung (JAD) darstellt. Die vom Anwendungs-Server AS gesendete Beschreibungsdatei BD (JADfile) erhält die vorstehend beschriebenen Metadaten des Vergebührungssystems. Diese Informationen werden dem Benutzer vor dem Herunterladen üblicherweise angezeigt und können über eine Annahme-Bestätigung angenommen werden, wobei eine Aktualisierung der Datenbanken bzw. der Preis-Speichereinheit 3A und insbesondere der Merkmals-Speichereinheit 3B mit diesen Daten erfolgt. Hiermit ist eine optionale Registrierung des Spiels abgeschlossen und es kann eine Ladeaufforderung und das Herunterladen des Anwendungsprogramms bzw. des Spiels durchgeführt werden.

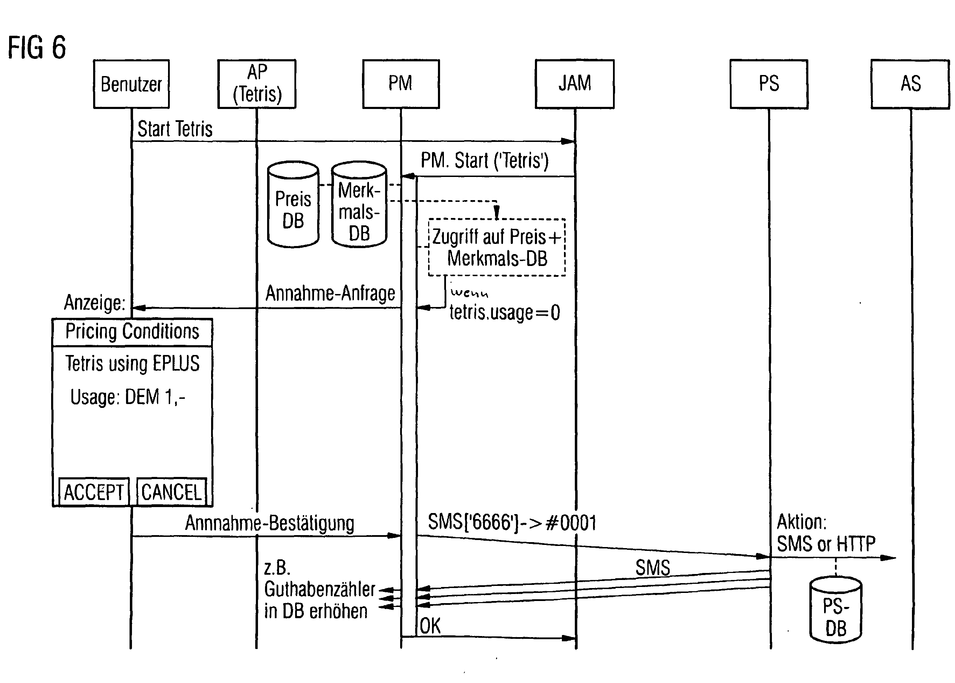

Gemäß Figur 6 soll nunmehr das Spiel "TETRIS" abgearbeitet werden, wobei eine entsprechende Anforderung von der Vergebührungseinheit an das Anwendungsprogramm, unter Berücksichtigung der Inhalte in der Vergebührungs-Speichereinheit 3 gemacht wird. Wenn hierbei beispielsweise das Freigabemerkmal "Benutzung" des Spiels "TETRIS" als Abfragewert den Wert Null aufweist, so erfolgt eine Annahmeanfrage an den Benutzer mit einer entsprechenden Darstellung der Benutzungskosten für die einmalige Benutzung des Spiels "TETRIS" über den Netzbetreiber E-Plus. Bei Annahme-Bestätigung sendet die Endgeräte-Vergebührungseinheit eine Abrechnungseinheit, z.B. SMS, mit dem zugehörigen digitalen Referenzcode DRC = "6666" an die Servicenummer 0001, wodurch bereits das Spiel freigegeben werden kann und der Abfragewert erhöht wird. Sollte jedoch ein Netzbetreiber keine derartige Vergebührung bei Absenden einer Abrechnungseinheit bereitstellen, so kann die Vergebührungsplattform eine oder eine Vielzahl von Abrechnungseinheiten SMS an das mobile Endgerät bzw. die Endgeräte-Vergebührungseinheit senden, welche daraufhin den Abfragewert (Zähler) in der Vergebührungs-Speichereinheit erhöht. Weiterhin kann die Vergebührungsplattform auch ein HTTP-Signal entsprechend ihrer Dienstanbieter-Speichereinheit an den Dienstanbieter oder andere Adressen absetzen.

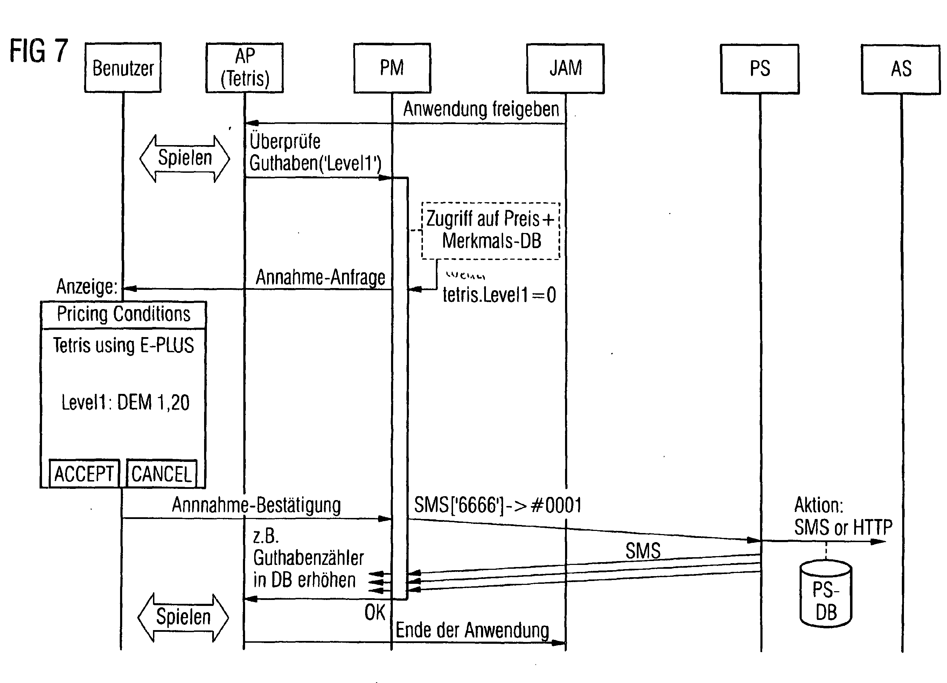

Gemäß Figur 7 wird nunmehr das Spiel bzw. das Anwendungsprogramms vom Anwendungs-Manager oder von der Endgeräte-Vergebührungseinheit freigegeben, wobei der Benutzer das Anwendungsprogramm "TETRIS" nutzen, bzw. spielen kann. In Abhängigkeit von einem jeweiligen Programmcode des Spiels erfolgt zu einem vorbestimmten Zeitpunkt, beispielsweise beim Eintreten in einen höheren Spiellevel, eine Freigabeanforderung in Abhängigkeit von diesem Freigabe-Merkmal. Unter Zugriff auf die Preis- und Merkmals-Speichereinheiten erfolgt nunmehr von der Endgeräte-Vergebührungseinheit wiederum eine Annahmeanfrage, sofern der Abfragewert für den Spiellevel 1 den Wert Null aufweist. Bei Annahme-Bestätigung des angezeigten Vergebührungsbetrags für das freizuschaltende Freigabe-Merkmal wird wiederum eine Abrechnungseinheit SMS mit einem zugehörigen digitalen Referenzcode DRC und einer zugehörigen Servicenummer "0002" an die vermittlungsseitige Vergebührungsplattform abgesetzt und verursacht somit wiederum eine Gutschrift des entsprechenden Betrags beim jeweiligen Dienstanbieter sowie eine (optionale) Rücksendung von Abrechnungseinheiten SMS an das mobile Endgerät, wodurch sich wiederum der Guthabenzähler für das jeweiligen Merkmal, z.B. Level 1, erhöhen lässt. Anschließend wird von der Endgeräte-Vergebührungseinheit das Spiel bzw. die Anwendung (TETRIS) frei geschaltet und wiederum ein Spielen durch den Benutzer so lange ermöglicht, bis dieser die Anwendung beendet.

Wird gemäß Figur 7 das Anwendungsprogramm, bzw. das Spiel beendet, so wird dieses der Endgeräte-Vergebührungseinheit angezeigt, wodurch wiederum ein Zugriff auf die Preis- und Merkmals-Speichereinheiten erfolgt. Insbesondere können hierbei Guthaben-Zeitdauerwerte gestoppt und für einen späteren Wiederaufruf des Spiels aufbewahrt werden. Auf diese Weise erfolgt unter Ausnutzung von ohnehin vorhandenen Abrechnungs-Schnittstellen und zugehörigen Abrechnungseinheiten eine unmittelbare Vergebührung mit einem Dienstanbieter ohne Übertragung von sicherheitsrelevanten Daten und ohne die Beschränkungen von Prepaid-Systemen.

Die Erfindung wurde vorstehend anhand eines Spieles für ein Anwendungsprogramms beschrieben. Sie ist jedoch nicht darauf beschränkt und umfasst vielmehr alle weiteren Anwendungsprogramms und insbesondere Daten, Informationen, Nachrichten und sonstige Dienstleistungen, die in eine Vielzahl von Unterdienstleistungen bzw. Teilmerkmale unterteilt und vergebührt werden können. Ferner ist die vorliegende Erfindung nicht auf die beschriebenen SMS- und IVR-Abrechnungseinheiten beschränkt, sondern umfasst vielmehr alle weiteren verfügbaren Abrechnungseinheiten in jeweiligen Netzwerken eines Netzbetreibers.

Gemäß dem vorliegenden Ausführungsbeispiel wurde ein JAVA-Anwendungsmanager zum Herunterladen und zusätzlichen Steuern der Endgeräte-Vergebührungseinheit verwendet. Dieser kann jedoch auch weggelassen oder durch entsprechende alternative Anwendungsmanager ersetzt werden. In gleicher Weise wurde bei der Weitergabe der Signale auf die Verwendung von HTTP-Signalen hingedeutet. In gleicher Weise sind jedoch auch alle weiteren Informationsprotokolle zur Nachrichtenweitergabe möglich und sinnvoll.

## Patentansprüche

1. Telekommunikations-Endgerät mit Vergebührungsvorrichtung, mit:
einer Anwendungs-Verarbeitungseinheit (1) zum Verarbeiten eines Anwendungsprogramms (AP);
einer Kommunikations-Schnittstelle (2) zu einem Netzbetreiber (OP), die eine zusätzliche Abrechnungs-Schnittstelle zum Übertragen von speziellen Abrechnungseinheiten (SMS, IVR) unterstützt;
einer Vergebührungs-Speichereinheit (3) zum Speichern von Datensätzen von zumindest einem Freigabe-Merkmal ("Merkmal") des Anwendungsprogramms (AP) und einem zugehörigen Abfragewert ("Guthaben"); und
einer Endgeräte-Vergebührungseinheit (4) zur Ansteuerung der Anwendungs-Verarbeitungseinheit (1), der Kommunikations-Schnittstelle (2) und der Vergebührungs-Speichereinheit (3) derart, dass
bei einer Freigabeanforderung (ER) des Anwendungsprogramms (AP) von der Vergebührungseinheit (4) über die Kommunikations- Schnittstelle (2) eine spezielle Abrechnungseinheit (SMS) von Endgerät (ME) an eine vermittlungsseitige Vergebührungsplattform gesendet wird, sowie bei erfolgreichem Senden der dem Freigabe Merkmal ("Merkmal") des Anwendungsprogramms (AP) zugehörige Abfragewert ("Guthaben"), der beispielsweise in der Vergebührungs-Speicheseinheit (3) abgelegt ist, gesetzt wird und eine Freigabe (EA) des Anwendungsprogramms (AP) nur bei gesetztem Abfragewert ("Guthaben") erfolgt und dieser hierbei rückgesetzt wird.

2. Telekommunikations-Endgerät nach Patentanspruch 1, **dadurch gekennzeichnet, dass** die Endgeräte-Vergebührungseinheit (4) die Anwendungs-Verarbeitungseinheit (1), die Kommunikations-Schnittstelle (2) und die Vergebührungs-Speichereinheit (3) derart ansteuert, dass der Abfragewert ("Guthaben") durch Senden oder Senden und Empfangen der speziellen Abrechnungseinheiten (SMS, IVR) erhöht und bei Freigabe (EA) des zugehörigen Freigabe-Merkmals für das Anwendungsprogramm (AP) verringert wird.

3. Telekommunikations-Endgerät nach Patentanspruch 1 oder 2, **dadurch gekennzeichnet, dass** die spezielle Abrechnungseinheit (SMS, IVR) eine Identifikationsnummer (ID) des Telekommunikations-Endgeräts (ME) und einen digitalen Referenzcode (DRC) zur Festlegung einer eindeutigen Zuordnung zwischen einem Dienstanbieter (DAN, DAC) und einem Anwendungsprogramm (AP, APC) überträgt.

4. Telekommunikations-Endgerät nach einem der Patentansprüche 1 bis 3, **dadurch gekennzeichnet, dass** die Vergebührungs-Speichereinheit (3) eine Preis-Speichereinheit (3A) zum Speichern von zumindest einer Preisgruppe (PGS1, PGS2) für zumindest eine Servicenummer eines Betreibers (OP) in Abhängigkeit von verwendeten Abrechnungseinheiten (SMS, IVR), und
eine Merkmals-Speichereinheit (3B) zum Speichern des zumindest einen Freigabe-Merkmals ("Merkmal"), der zugehörigen Preisgruppe (PGS1, PGS2) sowie dem zugehörigen digitalen Referenzcode (DRC) aufweist.

5. Telekommunikations-Endgerät nach einem der Patentansprüche 1 bis 4, **gekennzeichnet durch** einen Anwendungs-Manager (5) zur Realisierung eines Herunterladens des Anwendungsprogramms (AP) über die Kommunikations-Schnittstelle (2) von einem Anwendungs-Server (AS).

6. Telekommunikations-Endgerät nach einem der Patentansprüche 1 bis 5, **dadurch gekennzeichnet, dass** die spezielle Abrechnungseinheit eine Kurznachricht (SMS) oder ein Sprachsteurungscomputersignal (IVR) darstellt.

7. Telekommunikations-Endgerät nach einem der Patentansprüche 1 bis 6, **dadurch gekennzeichnet, dass** der Abfragewert ("Guthaben") eine Guthaben-Anzahl für ein zugehöriges Freigabe-Merkmal ("Merkmal") aufweist.

8. Telekommunikations-Endgerät nach einem der Patentansprüche 1 bis 7, **dadurch gekennzeichnet, dass** der Abfragewert ("Guthaben") eine Guthaben-Zeitdauer für ein zugehöriges Freigabe-Merkmal ("Merkmal") aufweist.

9. Telekommunikations-Endgerät nach einem der Patentansprüche 1 bis 8, **dadurch gekennzeichnet, dass** es ein mobiles Endgerät (ME) darstellt.

10. Vermittlungsseitige Vergebührungsplattform mit einer Kommunikations-Schnittstelle (6) zu einem Netzbetreiber (OP), die eine zusätzliche Abrechnungs-Schnittstelle (6A bis 6C) zum Übertragen von speziellen Abrechnungseinheiten (SMS, IVR) unterstützt;
einer Dienstanbieter-Speichereinheit (7) zum Speichern von Datensätzen von zumindest einem Dienstanbieter und einem zugehörigen Anwendungsprogramm (AP); und
einer Server-Vergebührungseinheit (8), die in Abhängigkeit von einer von einem Telekommunikations-Endgerät eingehenden speziellen Abrechnungseinheit (SMS, IVR) eine Zuordnung eines beim Betreiber (OP) durch die Abrechnungseinheit entstandenen Vergebührungswertes zum Dienstanbieter durchführt.

11. Vermittlungsseitige Vergebührungsplattform nach Patentanspruch 10, **dadurch gekennzeichnet, dass** die speziellen Abrechnungseinheiten (SMS, IVR) eine Identifikationsnummer (ID) des Telekommunikations-Endgeräts (ME) und einen digitalen Referenzcode (DRC) zur Festlegung einer eindeutigen Zuordnung zwischen einem Dienstanbieter und eines Anwendungsprogramms (AP) überträgt.

12. Vermittlungsseitige Vergebührungsplattform nach Patentanspruch 10 oder 11, **dadurch gekennzeich- net,**dass die Dienstanbieter-Speichereinheit (7) ferner eine Servicenummer, einen Anwendungsprogrammcode oder einen Aktionswert zu einem zugehörigen digitalen Referenzcode (DRC) speichert, wobei die Servicenummer, die Nummer eines jeweiligen Betreibers (OP), der Anwendungsprogrammcode ein jeweils genutztes Freigabe-Merkmal ("Merkmal") und der Aktionswert eine jeweils durchzuführende Aktion bei Empfang einer speziellen Abrechnungseinheit (SMS, IVR) darstellt.

13. Vermittlungsseitige Vergebührungsplattform nach Patentanspruch 12, **dadurch gekennzeichnet, dass** die durchzuführende Aktion das Absenden einer Nachricht (SMS, HTTP) an ein die spezielle Abrechnungseinheit (SMS, IVR) absetzendes Telekommunikations-Endgerät (ME) darstellt.

14. Vermittlungsseitige Vergebührungsplattform nach Patentanspruch 12 oder 13, **dadurch gekennzeich- net,** dass die durchzuführende Aktion das Absenden einer Nachricht (SMS, HTTP) an einen Anwendungs-Server (AS) des Dienstanbieters darstellt.

## Claims

1. Telecommunication terminal having charging apparatus, having:
an application-processing unit (1) for processing an application program (AP),
a communication interface (2) to a network operator (OP), which interface supports an additional invoicing interface for transmitting special invoicing units (SMS, IVR),
a charge-storage unit (3) for storing data records of at least one enabling feature ("feature") of the application program (AP) and one associated query value ("credit amount"), and
a terminal charging unit (4) for controlling the application-processing unit (1), the communication interface (2), and the charge-storage unit (3) in such a way that
when an Enable Request (ER) for the application program (AP) is sent from the charging unit (4) via the communication interface (2) a special invoicing unit (SMS) will be sent from the terminal (ME) to a charging platform on the exchange side and, if sending was successful, the query value ("credit amount") of the application program (AP), which value is stored in, for instance, the charging unit (3) and belongs to the enable feature ("feature"), will be set and said application program (AP) will only be released (EA: Enable Acknowledge) if the query value ("credit amount") has been set and said value will be reset thereby.

2. Telecommunication terminal according to claim 1, **characterised in that** the terminal charging unit (4) controls the application-processing unit (1), communication interface (2), and charge-storage unit (3) in such a way that the query value ("credit amount") will be increased through sending or sending and receiving of the special invoicing units (SMS, IVR) and decreased when the associated enabling feature is released (AE: Enable Acknowledge) for the application (AP).

3. Telecommunication terminal according to claim 1 or 2, **characterised in that** the special invoicing unit (SMS, IVR) transmits an identification number (ID) of the telecommunication terminal (ME) and a digital reference code (DRC) for establishing a unique assignment between a service provider (DAN, DAC) and an application program (AP, APC).

4. Telecommunication terminal according to one of claims 1 to 3, **characterised in that** the charge-storage unit (3) has a price-storage unit (3A) for storing at least one price group (PGS1, PGS2) for at least one service number of an operator (OP) as a function of invoicing units used (SMS, IVR), and
a feature-storage unit (3B) for storing the at least one enabling feature ("feature"), the associated price group (PGS1, PGS2), and the associated digital reference code (DRC).

5. Telecommunication terminal according to one of claims 1 to 4, **characterised by** an application manager (5) for implementing downloading of the application program (AP) from an application server (AS) over the communication interface (2).

6. Telecommunication terminal according to one of claims 1 to 5, **characterised in that** the special invoicing unit is a Short Message Service (SMS) message or an Interactive Voice Response (IVR) signal.

7. Telecommunication terminal according to one of claims 1 to 6, **characterised in that** the query value ("credit amount") has a credit-amount number for an associated enabling feature ("feature").

8. Telecommunication terminal according to one of claims 1 to 7, **characterised in that** the query value ("credit amount") has a credited duration for an associated enabling feature ("feature").

9. Telecommunication terminal according to one of claims 1 to 8, **characterised in that** it is a mobile terminal (ME).

10. Charging platform on the exchange side having
a communication interface (6) to a network operator (OP) which interface supports an additional invoicing interface (6A to 6C) for transmitting special invoicing units (SMS, IVR),
a service-provider storage unit (7) for storing data records of at least one service provider and one associated application program (AP), and
a server charging unit (8) which, as a function of a special invoicing unit (SMS, IVR) arriving from a telecommunication terminal, assigns a charging value, created on the side of the operator (OP) through the invoicing unit, to the service provider.

11. Charging platform on the exchange side according to claim 10, **characterised in that** the special invoicing units (SMS, IVR) transmit an identification number (ID) of the telecommunication terminal (ME) and a digital reference code (DRC) for establishing a unique assignment between a service provider and an application program (AP).

12. Charging platform on the exchange side according to claim 10 or 11, **characterised in that** the service-provider storage unit (7) furthermore stores a service number, an application program code, or an action value relating to an associated digital reference code (DRC), with said service number being the number of a respective operator (OP), said application program code representing a respectively used enabling feature ("feature"), and said action value representing an action respectively requiring to be performed when a special invoicing unit (SMS, IVR) is received.

13. Charging platform on the exchange side according to claim 12, **characterised in that** the action requiring to be performed is the sending of a message (SMS, HTTP) to a telecommunication terminal (ME) transmitting the special invoicing unit (SMS, IVR).

14. Charging platform on the exchange side according to claim 12 or 13, **characterised in that** the action requiring to be performed is the sending of a message (SMS, HTTP) to an application server (AS) of the service provider.

## Revendications

1. Terminal de télécommunication avec dispositif de taxation, comprenant :
une unité de traitement d'application (1) pour le traitement d'un programme d'application (AP) ;
une interface de communication (2) vers un exploitant de réseau (OP), qui supporte une interface de décompte supplémentaire pour la transmission d'unités de décompte spéciales (SMS, IVR) ;
une unité de stockage de taxation (3) pour le stockage d'ensembles de données d'au moins une caractéristique d'autorisation ("caractéristique") du programme d'application (AP) et une valeur d'interrogation correspondante ("crédit") ; et
une unité de taxation à terminaux (4) pour contrôler l'unité de traitement d'application (1), de l'interface de communication (2) et de l'unité de stockage de taxation (3) de telle sorte que
lors d'une demande d'autorisation (ER) du programme d'application (AP) de l'unité de taxation (4) par l'interface de communication (2), une unité de décompte spéciale (SMS) est envoyée du terminal (ME) à une plate-forme de taxation côté commutation, et, lors de l'émission réussie, la valeur d'interrogation ("crédit") correspondante à la caractéristique d'autorisation ("caractéristique") du programme d'application (AP), qui est déposée par exemple dans l'unité de stockage de taxation (3), est fixée et une autorisation (EA) du programme d'application (AP) intervient seulement si la valeur d'interrogation ("crédit") est fixée et lorsque celle-ci est remise à zéro dans ce cas.

2. Terminal de télécommunication selon la revendication 1, **caractérisé en ce que** l'unité de taxation à terminaux (4) contrôle l'unité de traitement d'application (1), l'interface de communication (2) et l'unité de stockage de taxation (3), de sorte que la valeur d'interrogation ("crédit") est augmentée par l'émission ou l'émission et la réception des unités de décompte spéciales (SMS, IVR) et réduite en cas d'autorisation (EA) de la caractéristique d'autorisation correspondante pour le programme d'application (AP).

3. Terminal de télécommunication selon la revendication 1 ou 2, **caractérisé en ce que** l'unité de décompte spéciale (SMS, IVR) transmet un numéro d'identification (ID) du terminal de télécommunication (ME) et un code de référence numérique (DRC) pour la fixation d'une attribution claire entre un prestataire de service (DAN, DAC) et un programme d'application (AP, APC).

4. Terminal de télécommunication selon l'une quelconque des revendications 1 à 3, **caractérisé en ce que** l'unité de stockage de taxation (3) présente une unité de stockage de prix (3A) pour le stockage d'au moins un groupe de prix (PGS1, PGS2) pour au moins un numéro de service d'un exploitant (OP) en fonction d'unités de décompte (SMS, IVR) utilisées, et une unité de stockage de caractéristiques (3B) pour le stockage de l'au moins une caractéristique d'autorisation ("caractéristique"), du groupe de prix concerné (PGS1, PGS2) et du code de référence numérique (DRC) correspondant.

5. Terminal de télécommunication selon l'une quelconque des revendications 1 à 4, **caractérisé par** un gestionnaire d'application (5) pour la réalisation d'un téléchargement du programme d'application (AP) par le biais de l'interface de communication (2) à partir d'un serveur d'application (AS).

6. Terminal de télécommunication selon l'une quelconque des revendications 1 à 5, **caractérisé en ce que** l'unité de décompte spéciale représente un message court (SMS) ou un signal informatique de commande vocale (IVR).

7. Terminal de télécommunication selon l'une quelconque des revendications 1 à 6, **caractérisé en ce que** la valeur d'interrogation ("crédit") présente un nombre de crédit pour la caractéristique d'autorisation correspondante ("caractéristique").

8. Terminal de télécommunication selon l'une quelconque des revendications 1 à 7, **caractérisé en ce que** la valeur d'interrogation ("crédit") présente une durée de crédit pour une caractéristique d'autorisation correspondante ("caractéristique").

9. Terminal de télécommunication selon l'une quelconque des revendications 1 à 8, **caractérisé en ce qu'**il représente un terminal mobile (ME).

10. Plate-forme de taxation côté commutation avec une interface de communication (6) pour un exploitant du réseau (OP), qui supporte une interface de décompte (6A à 6C) supplémentaire pour la transmission d'unités de décompte spéciales (SMS, IVR) ;
une unité de stockage de prestataire de service (7) pour le stockage d'ensembles de données d'au moins un prestataire de service et d'un programme d'application (AP) correspondant, et une unité de taxation à serveur (8), qui effectue en fonction d'une unité de décompte (SMS, IVR) spéciale, arrivant d'un terminal de télécommunication, une attribution d'une valeur de taxation occasionnée chez l'exploitant (OP) par l'unité de décompte pour le prestataire de service.

11. Plate-forme de taxation côté commutation selon la revendication 10, **caractérisée en ce que** l'unité de décompte (SMS, IVR) spéciale transmet un numéro d'identification (ID) du terminal de télécommunication (ME) et un code de référence numérique (DRC) pour la fixation d'une attribution claire entre un prestataire de service et un programme d'application (AP).

12. Plate-forme de taxation côté commutation selon la revendication 10 ou 11, **caractérisée en ce que** l'unité de stockage de prestataire de service (7) mémorise également un numéro de service, un code de programme d'application ou une valeur d'action pour un code de référence numérique (DRC) correspondant, le numéro de service représentant, un numéro d'un exploitant (OP) respectif, le code du programme d'application représentant une caractéristique d'autorisation respectivement utilisée ("caractéristique") et la valeur d'action représentant une action à effectuer respectivement en cas de réception d'une unité de décompte spéciale (SMS, IVR).

13. Plate-forme de taxation côté commutation selon la revendication 12, **caractérisée en ce que** l'action à effectuer représente l'envoi d'un message (SMS, HTTP) à un terminal de télécommunication (ME) déposant l'unité de décompte spéciale (SMS, IVR).

14. Plate-forme de taxation côté commutation selon la revendication 12 ou 13, **caractérisée en ce que** l'action à effectuer représente l'envoi d'un message (SMS, HTTP) à un serveur d'application (AS) du prestataire de service.
